# EUROPEAN PATENT SPECIFICATION

(11) **EP 1 302 251 B1**
(45) Date of publication and mention of the grant of the patent: **27.08.2008**
(21) Application number: 02014996.9
(22) Date of filing: 10.07.2002
(51) Int. Cl.: B09B 3/00, D21H 11/12, D21H 17/01

(54) **Method for producing a vegetable flour using residues of agroindustrial processes, and method for producing papers and cardboards using said flour**
Verfahren zur Herstellung eines pflanzlichen Pulvers unter Verwendung von Ruckständen von Agro-industriellen Prozessen, und Verfahren zur Herstellung von Papier und Pappen mit diesem Pulver
Méthode pour la fabrication d'une farine vegetale utilisant les residus des procédés agroindustriels, et une methode pour la fabrication de papier et de carton utilisant cette farine

(30) Priority: 16.07.2001 IT TV20010097
(43) Date of publication of application: 16.04.2003
(73) Proprietor: COFAV S.p.A., 36028 Rossano Veneto (Vicenza) (IT)
(72) Inventor: Nicolucci, Clemente, 31010 Paderno Del Grappa (IT)
(74) Representative: De Gregori, Antonella

(56) References cited:
- EP-A- 0 105 722
- EP-A- 0 337 653
- EP-A- 0 645 491
- EP-A- 0 831 176
- EP-A- 1 088 859
- EP-A- 1 088 937
- US-A- 4 562 218
- US-A- 5 944 953

## Description

The present invention relates to a method for producing a vegetable flour that uses, as a raw material, vegetable materials that are residues of agroindustrial processes, particularly shells, pits and peels, to a method for producing papers and cardboards featuring particular tactile and visual characteristics that uses the same vegetable flour, and to the use of said flour as filler for plastics, rubbers, panels, pre-shaped components and the like.

The development of methods based on the conversion of organic residues into flours that can be used in the production of papers and cardboards has been in progress for several years.

Some of these known methods include, for example, the use, known from EP-A 0 565 920, of seaweed to prepare flours that can be used in the production of paper products, with the consequent advantage of helping to solve the ecological and tourism problems caused by the superabundance of such seaweed in enclosed or partially enclosed seas such as the Adriatic Sea and in lagoons such as the Venice lagoon.

With respect to preceding similar methods, the method of the above cited document, of which the present applicant is the proprietor, has the advantage that it does not require the separation of the non-fibrous part of the seaweed, which besides has been found to improve the mechanical characteristics of the paper that is produced.

Moreover, the applicant has developed, as disclosed in EP-A-0 834 616, alternative methods for producing flours obtained from the residues of agroindustrial processes and particularly of citrus fruits, which can be used to manufacture scented papers.

This raw material is certainly easier to recover than seaweed and allows to produce papers that have a pleasant smell that is reminiscent of the smell of the citrus fruit from which the flours that compose them are derived.

Flours obtained from citrus fruit residues, moreover, allow to obtain a paper that is not only scented but also thin, lightweight and well-suited for writing and has a substantially ivory color.

However, with the introduction of said olfactory characteristic, which by stimulating the sense of smell attracts considerably the curiosity of the market, the need has been found to extend recycling to other residues of agroindustrial processes, with a method capable of associating with the papers further aesthetic properties, always of natural origin, that help to personalize them without reducing their mechanical properties.

The known method disclosed in EP-A-0 834 616 provides for the possibility to separate by screening a fraction of the citrus fruit flours that can be used later to give the paper a surface stippling or uniform coloring.

This refinement accordingly entails introducing a dyeing operation that is independent of the process and follows it, consequently extending the execution times.

EP-A-0 645 491 discloses a process for manufacturing paper from integral vegetable substances.

Another drawback of the above cited prior art is that a merely superficial application is easily subject to deterioration by aging and to discoloration by erasure with erasers or the like.

Another drawback that is common to the various known methods, some of which have been described above, is that the resulting flours, even if they receive the addition of particular preservative, bacteriostatic, insolubilizing and/or coagulating chemicals, do not have a fully satisfactory preservation, and lose in water considerable quantities of salts, sugars and colloids; accordingly, these flours must be converted into paper as soon as possible in order to avoid losing their mechanical properties.

Further, the use of said chemical agents causes problems of contamination of the wastewater and process water, while the dispersion of the solutes in water causes dirtying and deposition problems both in the production circuit and on the panel forming cloths, with consequent additional burdens in the manufacturing process.

The aim of the present invention is to provide a method that allows to provide, without the addition of preservative, bacteriostatic, insolubilizing and/or coagulating chemical agents, a vegetable flour that has fully satisfactory long-life properties and which in contact with water or aqueous solutions releases into the water or aqueous solution only a minimal quantity of soluble components, such as salts, sugars and colloids.

An object of the present invention is to provide a vegetable flour that is suitable to produce papers and cardboards having particular tactile, visual and olfactory characteristics, which are substantially reminiscent of the original fruit or vegetable, further allowing durable preservation of the mechanical properties and of the aesthetic properties of said paper and cardboards.

Within this aim, an object of the invention is to provide a method that allows to produce flours that do not lose their characteristics over time and therefore can be used even several years after their transformation to produce papers and cardboards without resorting to the use of chemicals or preservatives.

Another object of the invention is to provide a method for producing such a vegetable flour and a method for producing paper and cardboards that can be performed by way of machines and devices that are common in the field, have a considerably lower energy expenditure than the more common techniques based on the production of cellulose fibers obtained from trees, and entail no problems of environmental pollution.

This aim and these and other objects that will become better apparent hereinafter are achieved by the method for producing a vegetable flour that uses, as a raw material, a residual vegetable material, for example a residue of agroindustrial processes, as defined in claim 1, which comprises the steps of:
a) providing a residual vegetable material chosen from the group that consists of residual shells, pits, peel and mixtures thereof, said residual vegetable material having a dry content of more than 85% by weight with respect to the total weight of said vegetable material;
b) subjecting said residual vegetable material with a dry content of more than 85% by weight to a suitable milling step to triturate said vegetable material without damaging or breaking the cell walls of said vegetable material, thus obtaining a vegetable flour.

As regards shells and pits, the method according to the present invention uses in particular nuts, hazelnuts, peanuts, pistachios, pine seeds, peaches, apricots, plums, prunes, olives, cherries, coffee, dates and the like.

As regards the recovery of peels, the method according to the present invention uses in particular bananas, pears, apples, peaches, apricots, grapes, tomatoes, fennels, artichokes, peas, beans and pineapple and the like.

Preferably, the residual vegetable material provided to step a) is in a non-biodegraded state.

In the case of flours obtained from residual peels, the method advantageously provides for a preliminary step of drying before step a) and directly after the generation of the residual peels, or in any case prior to the spread of the natural biodegradation processes.

This drying step, further, is performed preferably at a controlled temperature, so that the temperature of the vegetable material does not exceed 90 °C and for the time required to reach a dry content of more than 85%, preferably more than 88% by weight with respect to the total weight of the vegetable material, without damaging or breaking its cell walls.

Further, drying is performed in a manner that does not generate intense pressures on the membrane of the cells that constitute the peels and does not use chemical agents such as strong acids, strong alkali, energy reducing and oxidizing agents or the like.

The above described refinements related to the drying step allow to correctly maintain over time the organoleptic characteristics of the residual shells, pits and peels.

Said shells, pits and peels in fact contain within their cells salts and colloids that are soluble in water and give them a preservative function.

By providing a drying step according to these refinements, these residues become triturable and reactivatable, so as to preserve their characteristics over time and be usable even years later.

If immersed in water, these triturated residues adsorb liquids and salts from the contact water without releasing the solubles contained therein to the water outside the cell membrane.

Flours constituted by properly dried vegetable cells store up to 15% free water without being affected by natural biodegradation phenomena for several years and without causing the release of the solubles from the cells in the consequent wettings, reactivations and agitations in water to which said flours must be subjected in order to be used fully in paper without generating byproducts.

The vegetable flour according to the present invention, if placed in contact with water or aqueous solutions, releases a quantity of soluble compounds that is less than 2% by weight on the total weight of the soluble compounds that are present in said flour.

In one embodiment, the method for obtaining the vegetable flour according to the present invention further includes a step of pulverization of said flour by means of a micronizing mill.

Another aspect of the present invention relates to a method for producing papers and cardboards as defined in claim 11, which uses as a raw material the vegetable flours that can be obtained with the method according to the present invention, mixed with a dispersion of cellulose fibers.

Preferably, the method for producing papers and cardboards according to the present invention comprises a step for screening said flour prior to the mixing step, in order to separate flour particles with an average size of 1-40 micrometers to be used in the mixing step.

If produced with a neutral pH according to the criteria detailed in the examples that follow, the resulting papers and cardboards have an improved energy and environmental content: the energy used to produce one ton of vegetable flour is approximately 30% of the energy commonly required to produce an equivalent quantity of cellulose fibers for paper, and the production process generates no polluting emissions.

The fraction of water-solubles that is present in said paper and cardboards is transferred to process waters or aqueous solutions in contact with the flour in a quantity of less than 2% by weight of the total solubles present therein.

The papers and cardboards have particular tactile, visual and olfactory characteristics, the latter being often very conspicuous, and substantially are reminiscent of the properties of the source fruit or vegetable of the respective shells, pits and residual peels, as shown in Tables 3 and 4.

The grammage has values comprised between 40 g/m² and 400 g/m², while the specific gravity is between 1.1 kg/dm³ and 1.4 kg/dm³.

In practice it has been found that the method thus performed achieves the intended aim and objects, allowing to produce papers and cardboards whose tactile and visual characteristics are substantially reminiscent of the source fruit or vegetable and are capable of attracting the curiosity of the market, further allowing long-term preservation both of the finished paper products and of the flours.

Another advantage of the invention is that it provides a method that can be performed by way of machines and devices that are common in the sector; said method further provides for a considerably lower energy expenditure than the more common techniques based on the production of cellulose fibers obtained from trees.

Another advantage of the invention is that if shells and pits are used, a drying step, which generally entails a considerable expenditure of energy and therefore of time, is not usually necessary.

The methods according to the present invention do not introduce particular problems of environmental pollution, since no chemical preservatives, bacteriostatic, insolubilizing and/or coagulating agents are used in the preparation of the flours.

The flours produced by means of the first two steps of the method according to the present invention as described above can also be used as fillers of plastics, rubbers, panels, pre-shaped components, and the like.

The invention thus conceived is susceptible of numerous modifications and variations, all of which are within the scope of the described inventive concept.

The following examples are provided merely by way of non-limitative illustration.

### EXAMPLE 1

### Production of paper containing 20% almond flour.

100 kg of flour were obtained by milling the residual shells of the almond fruits in a hammer mill and by screening them on a sieve (with 80 micron wire space). Said almond flour is constituted by particles having an average diameter of approximately 7 microns.

The flour was added to an aqueous dispersion constituted by 100 kg of bleached cellulose obtained from fir and 300 kg of bleached cellulose obtained from eucalyptus. This mixture received the addition of an aqueous dispersion of synthetic diketene adhesive, which makes the paper suitable for writing with water-based inks. Cationic starch was also added in order to improve flour retention. The production rate of the paper ribbon was 45 m/minute.

The composition of the mixture is listed in Table 1.

The characteristics of the produced paper are given in Table 3.

The strong ivory shade of this flour gives the paper a natural and pleasant shade of coloring and the paper is velvet-like to the touch; a book of the same size, number of pages and thickness, if made of 20% almond flour instead of with 20% of the calcium carbonate normally used in the production of papers, is on average 13% lighter. Paper made with 20% almond flour is easy to recycle and retains a higher energy content than papers filled with minerals.

### EXAMPLE 2

### Production of paper containing 20% nut flour.

100 kg of flour were obtained by milling the residues of the industrial processing of nuts with a hammer mill. These shell fractions were milled in a micronizing mill and screened on a sieve (with 80 micron wire space). Said nut flour is constituted by particles having an average diameter of approximately 8 microns.

The flour was added to the aqueous dispersion of cellulose fibers and then to the same auxiliary components used for the preceding example.

The operating conditions are the same as those used for producing paper in the preceding example.

The composition of the mixture is listed in Table 1.

The characteristics of the produced paper are given in Table 3.

This paper, which has a light brown/dark ivory shade of color, is reminiscent of the paper made with almond flour described above.

### EXAMPLE 3

### Production of paper containing 20% peanut flour.

100 kg of flour were obtained by milling the residual shells of the peanuts in a hammer mill and by screening them on a sieve (with 80 micron wire space). The peanut flour has an uneven particle size distribution, retains fibrous elements and has a very low apparent specific gravity, which is suitable to produce very soft high-thickness papers.

This peanut flour was added to the aqueous dispersion of cellulose fibers and then to the same auxiliary components used for the preceding examples.

The operating conditions are the same used to produce the paper of the preceding examples.

The composition of the mixture is listed in Table 1.

The characteristics of the produced paper are given in Table 3.

This paper was characterized by a pleasant shade of coloring and by a pleasant tactile response.

### EXAMPLE 4

### Production of paper containing 20% peach pit flour.

100 kg of peach pit flour were obtained by milling the pits with a hammer mill and by screening them on a sieve (with 80 micron wire space). The peach pit flour is constituted by particles with an average diameter of approximately 9 microns.

This peach pit flour was added to the aqueous dispersion of cellulose fibers and then to the same auxiliary components used for the preceding examples.

The operating conditions are the same used to produce the paper of the preceding examples.

The composition of the mixture is listed in Table 1.

The characteristics of the produced paper are given in Table 3.

This paper was found to be similar to the paper produced with almond shell flour.

### EXAMPLE 5

### Production of paper containing 20% hazelnut flour.

100 kg of peach pit flour were obtained by milling hazelnut shells with a hammer mill and by screening them on a sieve (with 80 micron wire space). The hazelnut flour is constituted by particles with an average diameter of approximately 10 microns.

This hazelnut flour was added to the aqueous dispersion of cellulose fibers and then to the same auxiliary components used for the preceding examples.

The operating conditions are the same used to produce the paper of the preceding examples.

The composition of the mixture is listed in Table 1.

The characteristics of the produced paper are given in Table 3.

This paper was found to be similar to the paper produced with almond shell flour.

### EXAMPLE 6

### Production of paper containing 20% tomato flour.

100 kg of flour were obtained by drying, milling and screening the residues of tomato process.

The tomato flour, after screening on a sieve with 80 micron wire space and after being reduced to an average diameter of approximately 6 microns, was added to the aqueous dispersion of cellulose fibers and then to the same auxiliary components used for the preceding examples.

The operating conditions are the same used to produce the paper of the preceding examples.

The composition of the mixture is listed in Table 2.

The characteristics of the produced paper are given in Table 4.

This paper was found to be very original, with a brick red shade and an individual sensory appeal.

### EXAMPLE 7

### Production of paper containing 20% banana flour.

100 kg of flour were obtained by drying, milling and screening the banana peels that were residues of fruit canning processes. Screening after the hammer mill was performed with a sieve with 200 micron wire space.

The banana flour, which was particularly fibrous, was added to the aqueous dispersion of cellulose fibers and then to the same auxiliary components used for the preceding examples.

The operating conditions are the same used to produce the paper of the preceding examples.

The composition of the mixture is listed in Table 2.

The characteristics of the produced paper are given in Table 4.

This paper is characterized by the presence of pleasant fibrous segments and by a pleasant amber shade of color.

### EXAMPLE 8

### Production of paper containing 20% apple flour.

100 kg of flour were obtained from the residues of the crushing of apples, which were rapidly dried, milled and screened on a sieve with 200 micron wire space. The apple flour is constituted by particles having an average diameter of approximately 12 microns.

The apple flour was added to the aqueous dispersion of cellulose fibers and then to the same auxiliary components used for the preceding examples.

The operating conditions are the same used to produce the paper of the preceding examples.

The composition of the mixture is listed in Table 2.

The characteristics of the produced paper are given in Table 4.

### EXAMPLE 9

### Production of paper containing 20% fennel flour.

100 kg of flour were obtained by milling the residual parts proximate to the core of the fennel. These fleshy leaves, constituted substantially by pure dietary cellulose, which is of course bleached, were dried, milled and screened on a sieve with 200 micron wire space. The fennel flour is constituted on average by particles that have a diameter of approximately 7 microns.

The fennel flour was added to the aqueous dispersion of cellulose fibers and then to the same auxiliary components used for the preceding examples.

The operating conditions are the same used to produce the paper of the preceding examples.

The composition of the mixture is listed in Table 2.

The characteristics of the produced paper are given in Table 4.

**Table 1 - Composition in kg of the paper mixture used**

| | Example 1 | Example 2 | Example 3 | Example 4 | Example 5 |
|---|---|---|---|---|---|
| Flour of... | Almonds 100 | Nuts 100 | Peanuts 100 | Peach pits 100 | Hazelnuts 100 |
| Bleached fir cellulose | 100 | 100 | 100 | 100 | 100 |
| Bleached eucalyptus cellulose | 300 | 300 | 300 | 300 | 300 |
| Adhesive with 7% dry content | 40 | 40 | 40 | 40 | 40 |
| Polyacrylamide retention agent | 0.2 | 0.2 | 0.2 | 0.2 | 0.2 |
| Cationic starch in mass | 5 | 5 | 5 | 5 | 5 |
| Anionic starch on surface | 20 | 20 | 20 | 20 | 20 |
| TOTAL kg | 565 | 565 | 565 | 565 | 565 |
| Good paper obtained kg | 470 | 430 | 440 | 390 | 450 |

**Table 2- Composition in kg of the paper mixture used**

| | Example 6 | Example 7 | Example 8 | Example 9 |
|---|---|---|---|---|
| Flour of... | Tomatoes 100 | Bananas 100 | Apples 100 | Fennels 100 |
| Bleached fir cellulose | 100 | 100 | 100 | 100 |
| Bleached eucalyptus cellulose | 300 | 300 | 300 | 300 |
| Adhesive with 7% dry content | 40 | 40 | 40 | 40 |
| Polyacrylamide retention agent | 0.2 | 0.2 | 0.2 | 0.2 |
| Cationic starch in mass | 5 | 5 | 5 | 5 |
| Anionic starch on surface | 20 | 20 | 20 | 20 |
| TOTAL kg | 565 | 565 | 565 | 565 |
| Good paper obtained kg | 350 | 440 | 470 | 360 |

**Table 3 - Characteristics of produced papers**

| | Example 1 | Example 2 | Example 3 | Example 4 | Example 5 |
|---|---|---|---|---|---|
| Paper containing 20% flour of | Almond | Nuts | Peanuts | Peach pits | Hazelnuts |
| Grammage g/m² | 79 | 82 | 80 | 81 | 83 |
| Thickness in microns µm | 102 | 102 | 106 | 101 | 103 |
| Bulk kg/dm³ | | | | | |
| Burst strength kg/cm² | 2.3 | 2.0 | 2.6 | 2.2 | 2.4 |
| Tint and color point | Ivory Dark | Brown Dark | Ivory Light | Brown Medium | Ivory Veined |
| Opacity | Good | Good | Excellent | Good | Excellent |
| Writability | Fair | Fair | Good | Good | Good |
| Printability | Good | Poor | Good | Fair | Good |
| Aroma | Sweet almonds | None | Peanut | Bitter almonds | None |

**Table 4 - Characteristics of produced papers**

| | Example 6 | Example 7 | Example 8 | Example 9 |
|---|---|---|---|---|
| Paper containing 20% flour of | Tomatoes | Bananas | Apples | Fennels |
| Grammage g/m² | 83 | 82 | 82 | 79 |
| Thickness in microns µm | 100 | 103 | 102 | 91 |
| Bulk kg/dm³ | 1.20 | 1.25 | 1.15 | 1.40 |
| Burst strength kg/cm² | 2.4 | 2.5 | 2.4 | 2.8 |
| Tint and color point | Red Brick | Ivory Light | Ivory Dark | White |
| Opacity | Good | Fair | Good | Poor |
| Writability | Limited | Good | Good | Excellent |
| Printability | Limited | Good | Fair | Excellent |
| Aroma | Tomato concentrate | Banana | Unripe apples | Intense between anise and fennel |

The disclosures in Italian Patent Application No. TV2001A000097, from which this application claims priority, are incorporated herein by reference.

## Claims

1. A method for producing a vegetable flour, particularly for use in the production of paper and cardboards, comprising the steps of:
a) providing a residual vegetable material chosen from the group that consists of residual shells, pits, peel and mixtures thereof, said residual vegetable material having a dry content of more than 85% by weight with respect to the total weight of said vegetable material; said step a) comprising the drying of a residual vegetable material at a controlled temperature, so that the temperature of the vegetable material does not exceed 90°C for a period of time suitable to obtain said vegetable material with a dry content of more than 85%
b) subjecting said residual vegetable material with a dry content of more than 85% by weight to a suitable milling step to triturate said vegetable material thus obtaining a vegetable flour, said vegetable flour, if placed in contact with water or aqueous solutions, releasing in said water or aqueous solution a quantity of soluble compounds that is less than 2% by weight with respect to the total weight of the soluble compounds that are present in said flour;
said method further comprising a step c) for pulverization of said flour by means of a micronization mill and a step of screening said flour to separate particles of flour with an average size of 6-40 micrometers.

2. The method according to claim 1, **characterized in that** said vegetable material is constituted by shells, pits or mixtures thereof.

3. The method according to claim 2, **characterized in that** said shells and pits are chosen from the group constituted by shells and pits of nuts, hazelnuts, peanuts, pistachios, pine seeds, peaches, apricots, plums, prunes, olives, cherries, coffee and dates.

4. The method according to claim 1, **characterized in that** said material is constituted by peels.

5. The method according to claim 4, **characterized in that** said peels are chosen from the group constituted by peels of bananas, pears, apples, peaches, apricots, grapes, tomatoes, fennels, artichokes, peas, beans and pineapple and/or the like.

6. The method according to any one of the preceding claims, **characterized in that** said residual vegetable material provided in step a) is in a non-biodegraded state.

7. The vegetable flour obtainable by means of a method according to any one of the preceding claims.

8. method for producing paper and cardboards having particular tactile and visual characteristics, comprising the steps of mixing a vegetable flour according to claim 7 with an aqueous dispersion of cellulose fibers.

9. The method according to claim 8 **characterized in that** said vegetable flour is mixed in a proportion of 1-50% by weight on the total weight of the vegetable flour and of the dispersion of cellulose fibers.

10. Papers and cardboards obtainable with a method according to one or more of claims 8 to 9

11. The paper and cardboards according to claim 10. **characterized in that** they have particular olfactory characteristics that are reminiscent of said vegetable material.

12. The paper and cardboard according to claim 10, **characterized in that** they have particular tactile and visual characteristics that are substantially reminiscent of properties of said source vegetable material of said residual shells, pits and peels.

## Patentansprüche

1. Verfahren zum Herstellen eines pflanzlichen Mehlstoffs, insbesondere zur Verwendung bei der Herstellung von Papier und Kartonagen, umfassend die folgenden Stufen:
a) Bereitstellen eines pflanzlichen Restmaterials, ausgewählt aus der Gruppe, die aus übrig bleibenden Schalen, Steinen bzw. Kernen, Fruchtschale bzw. Haut bzw. Abschnitt und Gemischen davon besteht, wobei das pflanzliche Restmaterial einen Trockengehalt von mehr als 85 Gew.-%, bezogen auf das Gesamtgewicht des pflanzlichen Materials, aufweist; wobei Stufe a) das Trocknen eines pflanzlichen Restmaterials bei einer kontrollierten Temperatur umfasst, sodass die Temperatur des pflanzlichen Materials 90°C nicht überschreitet, für eine Zeitdauer, die geeignet ist, um das pflanzliche Material mit einem Trockengehalt von mehr als 85% zu erhalten;
b) Unterziehen des pflanzlichen Restmaterials mit einem Trockengehalt von mehr als 85 Ges.-% einer geeigneten Vermahlungsstufe, um das pflanzliche Material zu zerreiben, wodurch ein pflanzlicher Mehlstoff erhalten wird, wobei der pflanzliche Mehlstoff, wenn er mit Wasser oder wässrigen Lösungen in Kontakt gebracht wird, eine Menge an löslichen Verbindungen in das Wasser oder die wässrige Lösung freisetzt, die weniger als 2 Ges.-%, bezogen auf das Gesamtgewicht der löslichen Verbindungen, die in dem Mehlstoff vorhanden sind, beträgt;
wobei das Verfahren weiterhin eine Stufe c) zur Pulverisierung des Mehlstoffs mittels einer Mikronisiermühle und eine Stufe des Klassierens des Mehlstoffs, um Partikel des Mehlstoffs mit einer mittleren Größe von 6 bis 40 Mikrometer abzutrennen, umfasst.

2. Verfahren gemäß Anspruch 1, **dadurch gekennzeichnet, dass** das pflanzliche Material durch Schalen, Steine bzw. Kerne oder Gemische davon dargestellt wird.

3. Verfahren gemäß Anspruch 2, **dadurch gekennzeichnet, dass** die Schalen und Steine bzw. Kerne ausgewählt werden aus der Gruppe, dargestellt durch Schalen und Steine bzw. Kerne von Nüssen, Haselnüssen, Erdnüssen, Pistazien, Kiefernsamen bzw. Pinienkernen, Pfirsichen, Aprikosen, Pflaumen, Backpflaumen bzw. Pflaumen, Oliven, Kirschen, Kaffee und Datteln.

4. Verfahren gemäß Anspruch 1, **dadurch gekennzeichnet, dass** das Material durch Fruchtschalen bzw. Häute bzw. Abschnitt dargestellt wird.

5. Verfahren gemäß Anspruch 4, **dadurch gekennzeichnet, dass** die Fruchtschalen bzw. die Häute bzw. der Abschnitt ausgewählt werden bzw. wird aus der Gruppe, dargestellt durch Fruchtschalen bzw. Häute bzw. Abschnitt von Bananen, Birnen, Äpfeln, Pfirsichen, Aprikosen, Trauben, Tomaten, Fenchel, Artischocken, Erbsen, Bohnen und Ananas und/oder dergleichen.

6. Verfahren gemäß einem der vorhergehenden Ansprüche, **dadurch gekennzeichnet, dass** das pflanzliche Restmaterial, das in Stufe a) bereitgestellt wird, in einem Zustand vorliegt, bei dem kein biologischer Abbau stattgefunden hat.

7. Pflanzlicher Mehlstoff, erhältlich mittels eines Verfahrens gemäß einem der vorhergehenden Ansprüche.

8. Verfahren zum Herstellen von Papier und Kartonagen mit besonderen taktilen und visuellen Charakteristika, umfassend die Stufen des Mischens eines pflanzlichen Mehlstoffs gemäß Anspruch 7 mit einer wässrigen Dispersion von Cellulosefasern.

9. Verfahren gemäß Anspruch 8, **dadurch gekennzeichnet, dass** der pflanzliche Mehlstoff in einem Anteil von 1 bis 50 Gew.-%, bezogen auf das Gesamtgewicht des pflanzlichen Mehlstoffs und der Dispersion von Cellulosefasern, (damit) gemischt wird.

10. Papiere und Kartonagen, erhältlich mit einem Verfahren gemäß einem oder mehreren der Ansprüche 8 bis 9.

11. Papier und Kartonagen gemäß Anspruch 10, **dadurch gekennzeichnet, dass** sie besondere olfaktorische Charakteristika aufweisen, die an das pflanzliche Material erinnern.

12. Papier und Kartonage gemäß Anspruch 10, **dadurch gekennzeichnet, dass** sie besondere taktile und visuelle Charakteristika aufweisen, die wesentlich an die Eigenschaften des pflanzlichen Quellenmaterials der übrig bleibenden Schalen, Steine bzw. Kerne und Fruchtschalen bzw. Häute bzw. Abschnitt erinnern.

## Revendications

1. Procédé de production d'une farine végétale, notamment pour une utilisation dans la production de papier et de cartons, comprenant les étapes consistant à:
a) former une matière végétale résiduelle choisie dans le groupe constitué de coquilles résiduelles, de noyaux, de pelures et de mélanges de ceux-ci, ladite matière végétale résiduelle ayant une teneur sèche de plus de 85 % en poids par rapport au poids total de ladite matière végétale ; ladite étape a) comprenant le séchage d'une matière végétale résiduelle à une température régulée, de sorte que la température de la matière végétale n'excède pas 90°C pendant une période appropriée pour obtenir ladite matière végétale avec une teneur sèche supérieure à 85 % ;
b) soumettre ladite matière végétale résiduelle avec une teneur sèche supérieure à 85 % en poids à une étape de broyage appropriée pour triturer ladite matière végétale, obtenant ainsi une farine végétale, ladite farine végétale, si elle est mise en contact avec de l'eau ou des solutions aqueuses, libérant dans ladite eau ou solution aqueuse une quantité de composés solubles inférieure à 2 % en poids par rapport au poids total des composés solubles présents dans ladite farine ;
ledit procédé comprenant en outre une étape c) de pulvérisation de ladite farine au moyen d'un broyeur de micronisation et une étape de tamisage de ladite farine pour séparer les particules de farine ayant une taille moyenne de 6 à 40 micromètres.

2. Procédé selon la revendication 1, **caractérisé en ce que** ladite matière végétale est constituée par des coquilles, des noyaux ou des mélanges de ceux-ci.

3. Procédé selon la revendication 2, **caractérisé en ce que** lesdits coquilles et noyaux sont choisis dans le groupe constitué par les coquilles et noyaux de noix, de noisettes, d'arachides, de pistaches, de pignons, de pêches, d'abricots, de prunes, d'olives, de cerises, de café et de dattes.

4. Procédé selon la revendication 1, **caractérisé en ce que** ladite matière est constituée de pelures.

5. Procédé selon la revendication 4, **caractérisé en ce que** les pelures sont choisies dans le groupe constitué par les pelures de bananes, de poires, de pommes, de pêches, d'abricots, de raisins, de tomates, de fenouils, d'artichauts, de pois, de fèves et d'ananas et/ou similaires.

6. Procédé selon l'une quelconque des revendications précédentes, **caractérisé en ce que** ladite matière végétale résiduelle formée à l'étape a) se trouve dans un état non biodégradé.

7. Farine végétale pouvant être obtenue au moyen d'un procédé selon l'une quelconque des revendications précédentes.

8. Procédé de production de papier et de cartons présentant des caractéristiques tactiles et visuelles particulières, comprenant les étapes consistant à mélanger une farine végétale selon la revendication 7 avec une dispersion aqueuse de fibres de cellulose.

9. Procédé selon la revendication 8, **caractérisé en ce que** ladite farine végétale est mélangée dans une proportion de 1 à 50 % en poids sur le poids total de la farine végétale et de la dispersion de fibres de cellulose.

10. Papiers et cartons pouvant être obtenus avec un procédé selon une ou plusieurs des revendications 8 à 9.

11. Papiers et cartons selon la revendication 10, **caractérisés en ce qu'**ils présentent des caractéristiques olfactives particulières qui rappellent ladite matière végétale.

12. Papiers et cartons selon la revendication 10, **caractérisés en ce qu'**ils présentent des caractéristiques tactiles et visuelles particulières qui rappellent sensiblement les propriétés de ladite matière végétale source desdits coquilles, noyaux et pelures résiduels.
